Europäisches Patentamt

European Patent Office

Office européen des brevets

(19)

(11) Veröffentlichungsnummer : **0 121 652**
**B1**

(12) # EUROPÄISCHE PATENTSCHRIFT

(45) Veröffentlichungstag der Patentschrift :
30.12.86

(51) Int. Cl.⁴ : **G 01 D** 3/06, G 01 B 11/00

(21) Anmeldenummer : 84100408.8

(22) Anmeldetag : 17.01.84

(54) Digitales elektrisches Längen- oder Winkelmesssystem.

(30) Priorität : 05.03.83 DE 3307931

(43) Veröffentlichungstag der Anmeldung :
17.10.84 Patentblatt 84/42

(45) Bekanntmachung des Hinweises auf die Patenterteilung : 30.12.86 Patentblatt 86/52

(84) Benannte Vertragsstaaten :
AT CH DE FR GB IT LI NL SE

(56) Entgegenhaltungen :
DE-A- 2 729 697
DE-A- 2 818 742
DE-A- 3 007 311

(73) Patentinhaber : Dr. Johannes Heidenhain GmbH
Nansenstrasse 17
D-8225 Traunreut (DE)

(72) Erfinder : Schmitt, Walter, Ing. (grad.)
Hochgernstrasse 22
D-8225 Traunreut (DE)

EP 0 121 652 B1

**Beschreibung**

Die Erfindung betrifft ein digitales elektrisches Längen- oder Winkelmeßsystem gemäß dem Oberbegriff des Anspruches 1.

Längen- oder Winkelmeßsysteme mit einer Einrichtung zum Abgleich oder zur Korrektur fehlerhafter Signalparameter von Abtastsignalen sind bereits bekannt. Derartige Signalparameter sind beispielsweise Symmetrie, Amplitude und Phasenwinkel.

In der DE-A-27· 29 697 ist ein Meßsystem mit einer Korrektureinrichtung zur Korrektur fehlerhafter Signalparameter von zu interpolierenden Abtastsignalen beschrieben ; die ermittelten Abweichungen der Signalparameter werden als digitale Korrekturwerte in einem Speicher zur Korrektur der digitalisierten Abtastsignale durch einen Rechner vor der Interpolation gespeichert. Bei dieser aufwendigen Korrektureinrichtung sind ein Rechner und ein Speicher erforderlich, die bei Längen- oder Winkelmeßsystemen nicht immer zur Verfügung stehen.

Der DE-A-28 18 742 entnimmt man eine Längenmeßeinrichtung, bei der von einer Abtasteinheit zwei gegeneinander phasenversetzte Abtastsignale erzeugt werden, von denen zur Einstellung der erforderlichen gegenseitigen Phasenlage der Abtastsignale das eine Abtastsignal am ersten Eingang einer Verstärkermischstufe anliegt, derem zweiten Eingang eine Regelspannung zugeführt wird, die vom anderen Abtastsignal abgeleitet und über einen Operationsverstärker und ein Potentiometer einstellbar ist. Diese Anordnung ist nur zum Abgleich der Phasenlage der Abtastsignale geeignet und bedarf eines verstärkenden Elements in Form eines Operationsverstärkers.

Die DE-A-30 07 311 offenbart ein Längen- oder Winkelmeßsystem, bei dem wenigstens ein Paar gegenphasige Abtastsignale liefernder Photoelemente antiparallel an eine Impulsformerstufe einer externen Auswerteeinrichtung angeschaltet ist. Zum Symmetrieabgleich der gegenphasigen Abtastsignale wird ein Gleichlichtsignal über den Mittelabgriff eines parallel an die beiden antiparallelen Photoelemente angeschlossenen Potentiometers in den Kreis der Photoelemente in der Abtasteinrichtung eingespeist. Bei dieser Einrichtung kann nur die Symmetrie gegenphasiger Abtastsignale abgeglichen werden ; der Symmetrieabgleich erfolgt nur in einer Richtung.

Der Erfindung liegt die Aufgabe zugrunde, bei einem Längen- oder Winkelmeßsystem der oben erwähnten Gattung eine Abgleicheinrichtung anzugeben, die mit einfachen Mitteln einen bipolaren Abgleich sämtlicher Signalparameter von Abtastsignalen erlaubt.

Diese Aufgabe wird erfindungsgemäß durch die Merkmale des Patentanspruchs 1 gelöst.

Die mit der Erfindung erzielten Vorteile bestehen insbesondere darin, daß die Abgleicheinrichtung nur aus nichtverstärkenden Elementen beispielsweise in Form von Widerständen und von lichtempfindlichen Elementen in der Abtasteinrichtung besteht : der bipolare Abgleich in beiden Richtungen kann einfach durch Einstellen der Potentiometer erfolgen und bleibt auch bei einem Austausch einer externen Auswerteeinrichtung erhalten. Es können somit die Symmetrie, das Amplitudenverhältnis und der erforderliche Phasenwinkel von Abtastsignalen nacheinander in der Abtasteinrichtung abgeglichen werden, wobei bei diesem Abgleich der Modulationsgrad der einzelnen Abtastsignale weitgehend unverändert bleibt.

Vorteilhafte Ausbildungen der Erfindung entnimmt man den abhängiger Patentansprüchen.

Ausführungsbeispiele der Erfindung werden anhand der Zeichnung näher erläutert.

Es zeigen

Figur 1 schematisch ein digitales lichtelektrisches Längenmeßsystem ;

Figur 2 eine Schaltungsanordnung zum Abgleich von Signalparametern ;

Figur 3 Abgleicheinrichtungen für die Symmetrie ;

Figur 4 Abgleicheinrichtungen für den Phasenwinkel und

Figur 5 Abgleicheinrichtungen für das Amplitudenverhältnis.

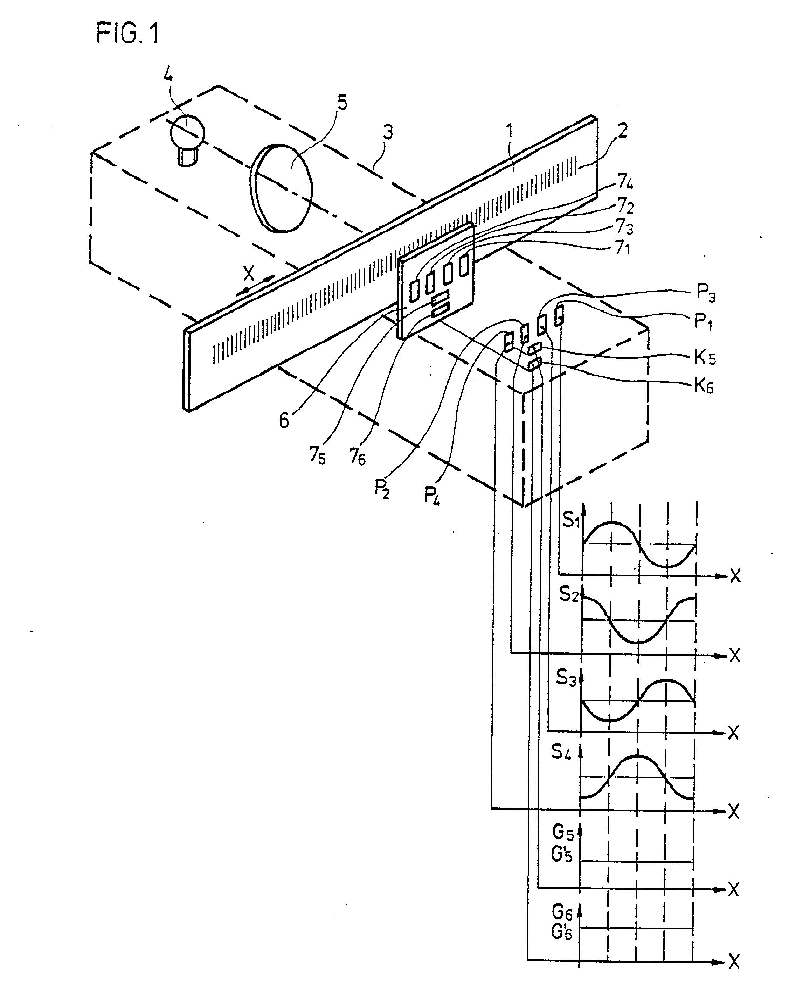

In Figur 1 ist schematisch ein digitales lichtelektrisches inkrementales Längenmeßsystem dargestellt, bei dem ein in Meßrichtung x längsverschieblicher Maßstab 1 in nicht dargestellter Weise beispielsweise mit dem Schlitten einer Werkzeugmaschine verbunden ist und eine inkrementale Teilung 2 besitzt, die von einer Abtasteinrichtung 3 abgetastet wird, die am Bett dieser Werkzeugmaschine befestigt ist. Die Abtasteinrichtung 3 weist eine Glühlampe 4, einen Beleuchtungskondensor 5, eine Abtastplatte 6 mit Abtastfeldern $7_1$-$7_4$ für die inkrementale Teilung 2 sowie den Abtastfeldern $7_1$-$7_4$ zugeordnete Abtastphotoelemente $P_1$-$P_4$ auf.

Die Abtastfelder $7_1$-$7_4$ besitzen nicht dargestellte Teilungen, die mit der Teilung 2 des Maßstabs 1 übereinstimmen. Da die Teilungen der Abtastfelder $7_1$-$7_4$ um eine viertel Teilungsperiode der Teilung 2 — d. h. um einen Phasenwinkel von 90° — gegeneinander versetzt sind, liefern bei der Bewegung des Maßstabs 1 relativ zur Abtasteinrichtung ·3 die zugehörigen Abtastphotoelemente $P_1$-$P_4$ dementsprechend periodische Abtastsignale $S_1$-$S_4$, die ebenfalls um den Phasenwinkel von 90° gegeneinander versetzt sind.

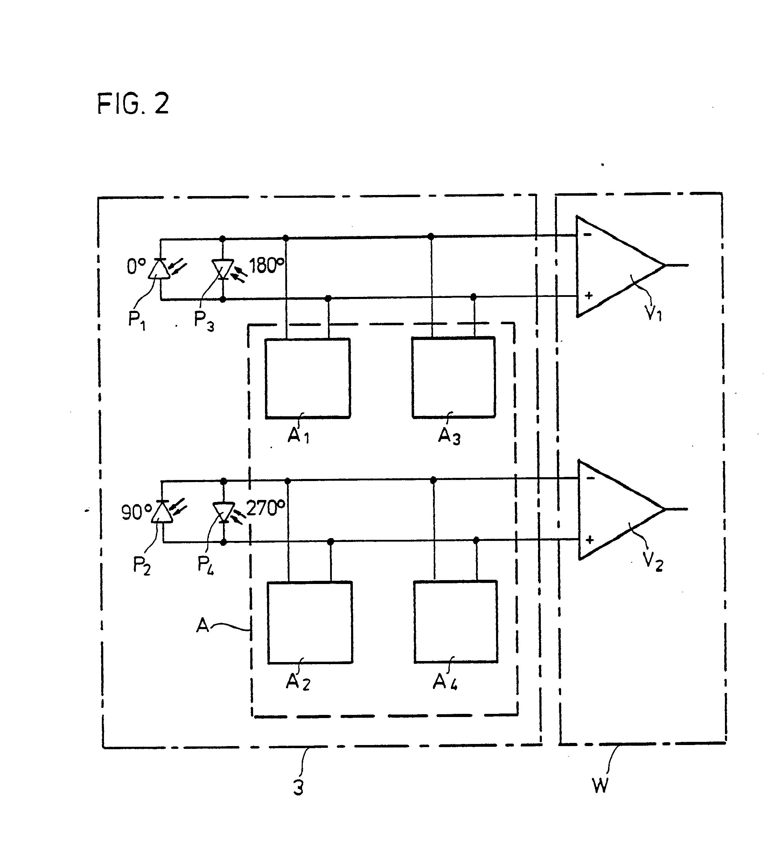

Diese Abtastsignale $S_1$-$S_4$ sind gleichspannungsbehaftet. Zur Eliminierung dieser Gleichspannungsanteile werden durch Antiparallelschaltung der Abtastphotoelemente $P_1$, $P_3$ bzw. $P_2$, $P_4$ (Figur 2) zwei nullsymmetrische Differenzsignale $D_0 = S_1$-$S_3$ (Phasenlage 0°) bzw. $D_{90} = S_2$-$S_4$ (Phasenlage 90°) gebildet, die also zu den Abszissen x der Figur 1 symmetrisch verlaufen und den gegenseitigen Phasenversatz von 90° aufweisen. Durch diese Differenz-

2

bildungen werden auch Signalhöhenschwankungen durch Änderungen der Lampenhelligkeit kompensiert, so daß eine exakte Triggerung der Differenzsignale $D_0$, $D_{90}$ beim Nulldurchgang in einer Auswerteeinheit W erfolgen kann. Der Phasenversatz von 90° zwischen den beiden Differenzsignalen $D_0$, $D_{90}$ erlaubt eine eindeutige Diskriminierung der Bewegungsrichtung des Maßstabs 1 relativ zur Abtasteinrichtung 3.

Da handelsübliche Photoelemente aber in ihrer Charakteristik im allgemeinen voneinander abweichen, d. h. Abtastsignale mit unterschiedlichen Gleichspannungsanteilen erzeugen, müssen die Abtastsignale $S_1$-$S_4$ zur Erzielung der nullsymmetrischen Differenzsignale $D_0$, $D_{90}$ durch Differenzbildung auf Symmetrie abgeglichen werden, d. h. die Gleichspannungsanteile der Abtastsignale $S_1$, $S_3$ bzw. $S_2$, $S_4$ müssen den gleichen Betrag aufweisen. Da die Differenzsignale $D_0$, $D_{90}$ auch hinsichtlich ihrer Amplituden und hinsichtlich der geforderten gegenseitigen Phasenlage von 90° voneinander abweichen können, müssen gleichfalls das gegenseitige Amplitudenverhältnis und der gegenseitige Phasenwinkel abgeglichen werden. Der genaue Abgleich dieser Signalparameter Symmetrie, Amplitude und Phasenwinkel ist insbesondere dann von Wichtigkeit, wenn innerhalb der Signalperioden der Abtastsignale Interpolationswerte mit hohem Unterteilungsfaktor gebildet werden sollen.

In Figur 2 ist eine Schaltungsanordnung mit einer Abgleicheinrichtung A zum Abgleich der Signalparameter Symmetrie, Amplitude und Phasenwinkel dargestellt. Die Abtastphotoelemente $P_1$, $P_3$ sind in der Abtasteinrichtung 3 antiparallel an die beiden Eingänge eines Differenzverstärkers $V_1$ und die Abtastphotoelemente $P_2$, $P_4$ antiparallel an die beiden Eingänge eines Differenzverstärkers $V_2$ einer externen Auswerteeinrichtung W angeschaltet, die von der Abtasteinrichtung 3 räumlich getrennt ist. Die Abgleicheinrichtung A weist eine Abgleicheinrichtung $A_1$ zum Symmetrieabgleich der Abtastsignale $S_1$, $S_3$, eine Abgleicheinrichtung $A_2$ zum Symmetrieabgleich der Abtastsignale $S_2$, $S_4$, eine Abgleicheinrichtung $A_3$ zum Abgleich des geforderten Phasenwinkels zwischen den Differenzsignalen $D_0$, $D_{90}$ und eine Abgleicheinrichtung $A_4$ zum Abgleich des Amplitudenverhältnisses der Differenzsignale $D_0$, $D_{90}$ auf.

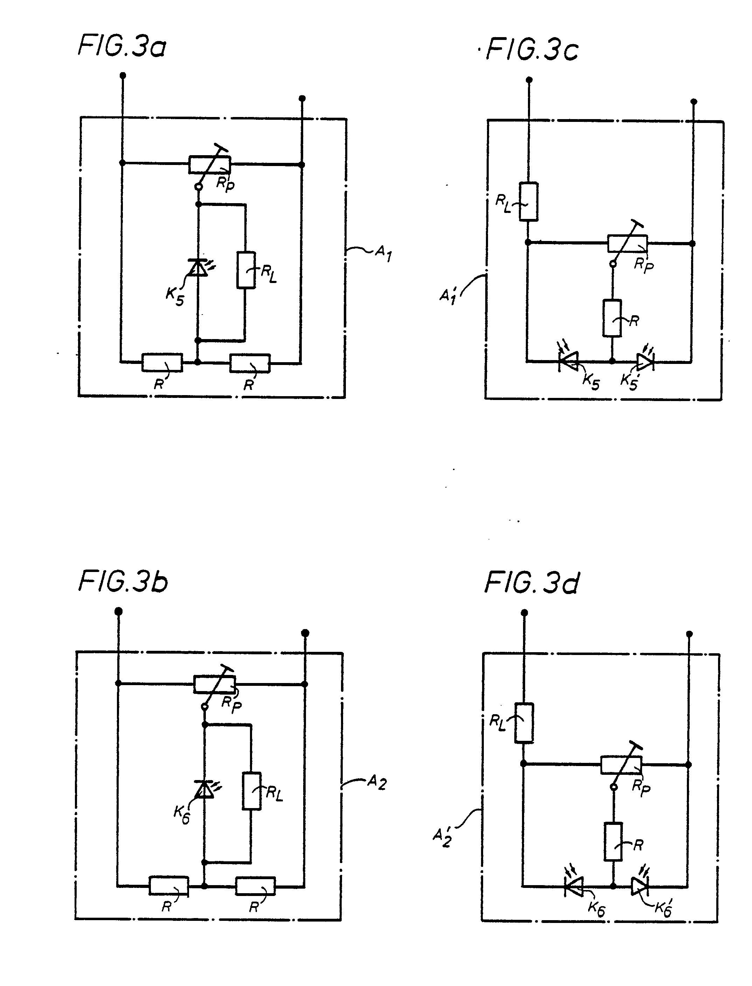

Gemäß Figur 3a besteht die Abgleicheinrichtung $A_1$ zum Symmetrieabgleich der Abtastsignale $S_1$, $S_3$ aus einer Widerstandsbrücke, deren erste Diagonale ein Abgleichphotoelement $K_5$ aufweist, dem ein Widerstand $R_L$ parallel geschaltet ist; die zweite Diagonale ist über die Ausgänge der Abgleicheinrichtung $A_1$ parallel zu den Abtastphotoelementen $P_1$, $P_3$ mit den Eingängen des Differenzverstärkers $V_1$ verbunden (Figur 2). Dem Abgleichphotoelement $K_5$ ist auf der Abtastplatte 6 der Abtasteinrichtung 3 ein Abtastfeld $7_5$ zugeordnet, das keine Teilung aufweist; dieses Abgleichphotoelement $K_5$ wird von der Lampe 4 außerhalb der Teilung 2 des Maßstabs 1 durch das Abtastfeld $7_5$ mit unmoduliertem Licht beaufschlagt und liefert ein konstantes Abgleichsignal $G_5$ (Figur 1). Die Widerstandsbrücke besteht aus zwei Widerständen R und aus einem Potentiometer $R_p$; durch Einstellen des Potentiometers $R_p$ können die Abtastsignale $S_1$, $S_3$ auf Symmetrie, d. h. auf gleiche Gleichspannungsanteile, bipolar abgeglichen werden.

Die Abgleicheinrichtung $A_2$ nach Figur 3b zum Symmetrieabgleich der Abtastsignale $S_2$, $S_4$ entspricht im wesentlichen der Abgleicheinrichtung $A_1$ nach Figur 3a mit gleichen Bezugszeichen. Die erste Diagonale der Widerstandsbrücke weist ein Abgleichphotoelement $K_6$ auf, dem ein Abtastfeld $7_6$ ohne Teilung auf der Abtastplatte 6 zugeordnet ist; die zweite Diagonale ist über die Ausgänge der Abgleicheinrichtung $A_2$ parallel zu den Abtastphotoelementen $P_2$, $P_4$ mit den Eingängen des Differenzverstärkers $V_2$ verbunden (Figur 2). Dieses Abgleichphotoelement $K_6$ wird ebenfalls von der Lampe 4 außerhalb der Teilung 2 durch das Abtastfeld $7_6$ mit unmoduliertem Licht beaufschlagt und liefert ein konstantes Abgleichsignal $G_6$ (Figur 1). Durch Einstellen des Potentiometers $R_p$ ist ein bipolarer Abgleich der Abtastsignale $S_2$, $S_4$ auf Symmetrie in beiden Richtungen möglich.

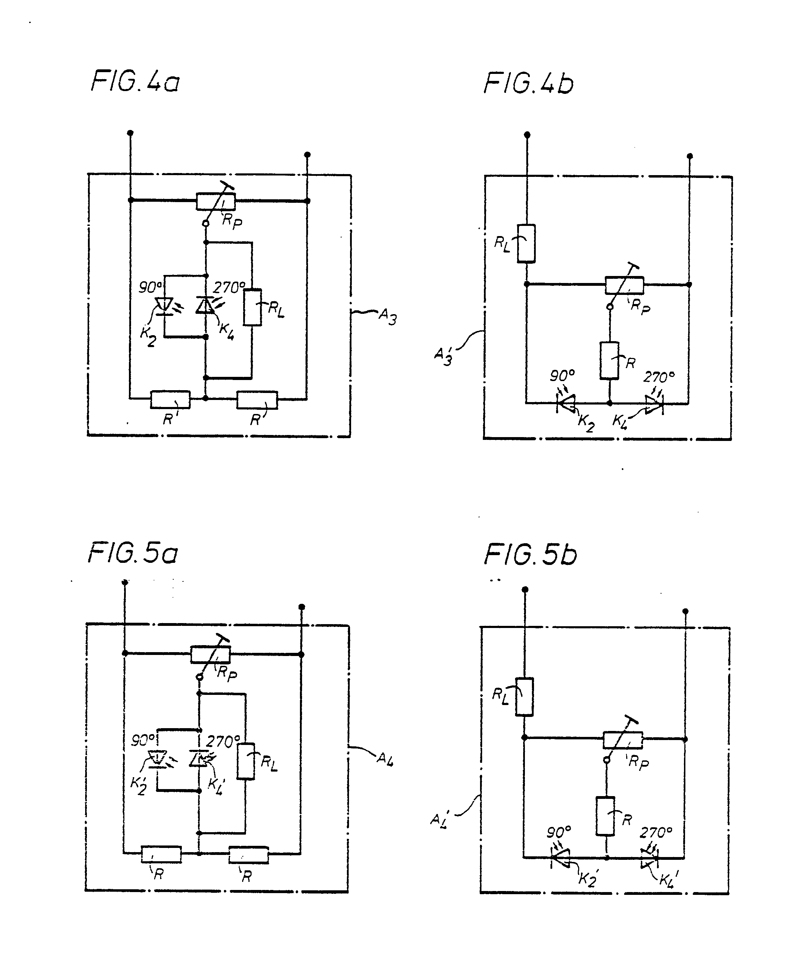

Die Abgleicheinrichtung $A_3$ gemäß Figur 4a zum Abgleich des geforderten Phasenwinkels zwischen den Differenzsignalen $D_0 = S_1$-$S_3$, $D_{90} = S_2$-$S_4$ entspricht im wesentlichen der Abtasteinrichtung $A_1$ nach Figur 3a mit gleichen Bezugszeichen. Die erste Diagonale der Widerstandsbrücke weist zwei antiparallel geschaltete Abgleichphotoelemente $K_2$, $K_4$ auf, denen in nicht dargestellter Weise Abtastfelder auf der Abtastplatte 6 zugeordnet sind, deren Teilungen mit der Teilung 2 des Maßstabs 1 identisch sind. Die zweite Diagonale ist über die Ausgänge der Abgleicheinrichtung $A_3$ parallel zu den Abtastphotoelementen $P_1$, $P_3$ mit den Eingängen des Differenzverstärkers $V_1$ verbunden (Figur 2). Das von der Lampe 4 ausgehende Licht wird beim Durchsetzen der Teilung 2 des Maßstabs 1 und der Teilungen dieser Abtastfelder moduliert und beaufschlagt die Abgleichphotoelemente $K_2$, $K_4$. Das vom Abgleichphotoelement $K_2$ gelieferte Abgleichsignal $G_2$ entspricht in seinem Verlauf dem Abtastsignal $S_2$ und ist gegenüber dem Abtastsignal $S_1$ um 90° phasenverschoben; das vom Abgleichphotoelement $K_4$ gelieferte Abgleichsignal $G_4$ entspricht in seinem Verlauf dem Abtastsignal $S_4$ und ist gegenüber dem Abtastsignal $S_3$ ebenfalls um 90° phasenverschoben. Die Abgleichphotoelemente $K_2$, $K_4$ liefern somit ein Differenzabgleichsignal $G_{90} = G_2$-$G_4$ mit einem Phasenversatz von 90° zum einzustellenden Differenzsignal $D_0 = S_1$-$S_3$. Durch Einstellen des Potentiometers $R_p$ erfolgt ein bipolarer Abgleich der geforderten Phasenlage von 90° des Differenzsignals $D_0$ bezüglich des Differenzsignals $D_{90}$.

Die Abgleicheinrichtung $A_4$ gemäß Figur 5a zum Abgleich des Amplitudenverhältnisses der Differenzsignale $D_0$, $D_{90}$ entspricht ebenfalls im

wesentlichen der Abtasteinrichtung A$_1$ nach Figur 3a mit gleichen Bezugszeichen. Die erste Diagonale der Widerstandsbrücke weist zwei antiparallel geschaltete Abgleichsphotoelemente K$_2'$, K$_4'$ auf. denen in nicht dargestellter Weise Abtastfelder auf der Abtastplatte 6 zugeordnet sind. deren Teilungen mit der Teilung 2 des Maßstabs 1 identisch sind. Die zweite Diagonale ist über die Ausgänge der Abgleicheinrichtung A$_4$ parallel zu den Abtastphotoelementen P$_2$. P$_4$ mit den Eingängen des Differenzverstärkers V$_2$ verbunden (Figur 2). Das von der Lampe 4 ausgehende Licht wird beim Durchsetzen der Teilung 2 des Maßstabs 1 und der Teilungen dieser Abtastfelder moduliert und beaufschlagt die Abgleichphotoelemente K$_2'$. K$_4'$. Das vom Abgleichphotoelemente K$_2'$. K$_4'$. Das vom Abgleichphotoelement K$_2'$ gelieferte Abgleichsignal G$_2'$ entspricht in seiner Phasenlage dem Abtastsignal S$_2$ und das vom Abgleichphotoelement K$_4'$ gelieferte Abgleichsignal G$_4'$ in seiner Phasenlage dem Abtastsignal S$_4$. Die Abgleichphotoelemente K$_2'$, K$_4'$ liefern somit ein Differenzsignal G$_{90}' = $ G$_2'$-G$_4'$. dessen Phasenlage mit dem einzustellenden Differenzsignal D$_{90} = $ S$_2$-S$_4$ übereinstimmt. Durch Einstellen des Potentiometers R$_p$ erfolgt ein bipolarer Abgleich der Amplitude des Differenzsignals D$_{90}$ bezüglich der Amplitude des Differenzsignals D$_0$.

In den Figuren 3c. 3d. 4b und 5b sind Abgleicheinrichtungen A$_1'$-A$_4'$ angegeben. deren Funktionen denen der Abgleicheinrichtung A$_1$-A$_4$ entsprechen.

In diesen Abgleicheinrichtungen A$_1'$-A$_4'$ mit jeweils einer Brückenschaltung befinden sich der Widerstand R in der ersten Diagonale und der Widerstand R$_L$ in der zweiten Diagonale ; im einen Seitenzweig sind das Potentiometer R$_p$ und im anderen Seitenzweig jeweils die Abgleichphotoelemente K$_2$. K$_4$ : K$_2'$. K$_4'$ ; K$_5$. K$_5'$ ; K$_6$. K$_6'$ angeordnet. die jeweils gegenpolig in Reihe geschaltet sind somit eine monolithische Anordnung erlauben. Gegenüber den Abgleicheinrichtugen A$_1$. A$_2$ benötigen die Abgleicheinrichtungen A$_1'$. A$_2'$ zum bipolaren Abgleich zwei gleichartige Abgleichphotoelemente K$_5$. K$_5'$ ; K$_5$. K$_6'$.

Durch Beleuchtung der Abtastphotoelemente P$_1$-P$_4$ und der Abgleichphotoelemente k$_2$. K$_4$ : K$_2'$. K$_4'$ : K$_5$. K$_5'$ : K$_6$ : K$_6'$ mit derselben Lichtquelle 4 bleibt der Abgleich der Signalparameter auch bei Helligkeitsänderungen der Lichtquelle 4 erhalten.

Der Abgleich der Signalparameter wird zweckmäßig in der Reihenfolge Amplitude. Phasenwinkel und Symmetrie durchgeführt. weil die eventuell vorhandenen Gleichspannungsanteile der Abgleichsignale G$_2$. G$_4$ ; G$_2'$. G$_4'$ den Symmetrieabgleich beeinflussen.

Die bezüglich ihrer Signalparameter abgeglichenen Differenzsignale D$_0$. D$_{90}$ werden in der Auswerteeinrichtung W ausgewertet und einer nicht gezeigten Steuer- und/oder Anzeigeeinrichtung zugeführt.

Die Erfindung ist nicht auf lichtelektrische Meßsysteme beschränkt. sondern auch bei magnetischen. induktiven oder kapazitiven Meßsystemen mit Erfolg anwendbar. Die Abgleichelemente können gleichfalls als magnetische. induktive oder kapazitive Elemente ausgebildet sein.

**Patentansprüche**

1. Digitales elektrisches Längen- oder Winkelmeßsystem mit einer Abtasteinrichtung (3) zur Abtastung einer Maßverkörperung (1). mit einer Auswerteeinrichtung (W) zur Auswertung des von wenigstens einem Abtastelement (P) der Abtasteinrichtung (3) gelieferten Abtastsignals (S). wobei das wenigstens eine Abtastelement (P) an die Auswerteeinrichtung (3) angeschaltet ist. und mit einer wenigstens ein Abgleichelement (K) sowie ein Einstellelement (R$_p$) aufweisenden Abgleicheinrichtung (A) zum Abgleich wenigstens eines fehlerhaften Signalparameters der Abtastsignale (S). dadurch gekennzeichnet. daß die Abgleicheinrichtung (A) aus mindestens einer das Einstellelement (R$_p$) aufweisenden Brückenschaltung besteht. die von dem wenigstens einen Abgleichelement (K) gespeist ist und deren eine Diagonale parallel zu dem wenigstens einen Abtastelement (P) in der Abtasteinrichtung (3) an die Auswerteeinrichtung (W) angeschaltet ist.

2. Meßsystem nach Anspruch 1. dadurch gekennzeichnet. daß die Abgleicheinrichtung (A$_1$ : A$_2$) zum Symmetrieabgleich der Abtastsignale (S$_1$, S$_3$ ; S$_2$. S$_4$) der Abtastelemente (P$_1$, P$_3$ ; P$_2$. P$_4$) in der Brückenschaltung wenigstens ein Abgleichelement (K$_5$. K$_5'$ ; K$_6$, K$_6'$) aufweist. das ein konstantes Abgleichsignal (G$_5$. G$_5'$ ; G$_6$, G$_6'$) liefert.

3. Meßsystem nach Anspruch 1. dadurch gekennzeichnet. daß die Abgleicheinrichtung (A$_3$) zum Abgleich des Phasenwinkels zwischen den Abtastsignalen (S$_1$, S$_3$ ; S$_2$, S$_4$) der Abtastelemente (P$_1$, P$_3$ ; P$_2$, P$_4$) in der Brückenschaltung zwei Abgleichelemente (K$_2$, K$_4$) aufweist. deren modulierte Abgleichsignale (K$_2$, G$_4$) in der Phasenlage um 90° gegen die Abtastsignale (S$_1$, S$_3$) verschoben sind.

4. Meßsystem nach Anspruch 1. dadurch gekennzeichnet. daß die Abgleicheinrichtung (A$_4$) zum Abgleich des Amplitudenverhältnisses der Abtastsignale (S$_1$, S$_3$ ; S$_2$, S$_4$) der Abtastelemente (P$_1$, P$_3$ ; P$_2$, P$_4$) in der Brückenschaltung zwei Abgleichelemente (K$_2'$, K$_4'$) aufweist. deren modulierte Abgleichsignale (G$_2'$, G$_4'$) in der Phasenlage mit den Abtastsignalen (S$_2$, S$_4$) übereinstimmen.

5. Meßsystem nach Anspruch 1. dadurch gekennzeichnet. daß die Abtastelemente (P) und die Abgleichelemente (K) aus lichtempfindlichen Elementen bestehen.

6. Meßsystem nach Anspruch 5. dadurch gekennzeichnet. daß die Abtastelemente (P) und die Abgleichelemente (K) von derselben Lichtquelle (4) beleuchtet werden.

7. Meßsystem nach Anspruch 1. dadurch gekennzeichnet. daß die Abgleichelemente (K) aus magnetischen. induktiven oder kapazitiven Elementen bestehen.

8. Meßsystem nach Anspruch 1. dadurch gekennzeichnet. daß die Brückenschaltungen der Abgleicheinrichtung (A) jeweils wenigstens einen Festwiderstand (R. R$_L$) und einen einstellbaren Widerstand (R$_D$) aufweisen.

## Claims

1. Digital electrical lengths or angle-measuring system comprising a scanning device (3) for scanning an embodiment of a dimension (1). comprising an evaluating device (W) for evaluating the scanning signal (S) supplied by at least one scanning element (P) of the scanning device (3). the at least one scanning element (P) being connected to the evaluating device (3). and comprising a calibrating device (A) having at least one calibrating element (K) and one adjusting element (R$_D$). for calibrating at least one faulty signal parameter of the scanning signals (S). characterized in that the calibrating device (A) consists of at least one bridge circuit which is provided with the adjusting element (R$_D$) and which is fed by the at least one calibrating element (K) and one diagonal of which is connected to the evaluating device (W) in parallel with the at least one scanning element (P) in the scanning device (3).

2. Measuring system according to Claim 1. characterized in that the calibrating device (A$_1$ : A$_2$) for calibrating the symmetry of the scanning signals (S$_1$, S$_3$ : S$_2$, S$_4$) of the scanning elements (P$_1$, P$_3$ : P$_2$, P$_4$) in the bridge circuit is provided with at least one calibrating element (K$_5$, K$_5$' ; K$_6$, K$_6$) which supplies a constant calibrating signal (G$_5$. G$_5$ : G$_6$. G$_6$').

3. Measuring system according to Claim 1. characterized in that the calibrating device (A$_3$) for calibrating the phase angle between the scanning signals (S$_1$. S$_3$ : S$_2$. S$_4$) of the scanning elements (P$_1$. P$_3$ : P$_2$. P$_4$) in the bridge circuit is provided with two calibrating elements (K$_2$. K$_4$) the phase relationship of the modulated calibrating signals (G$_2$. G$_4$) of which is displaced by 90° with respect to the scanning signals (S$_1$. S$_3$).

4. Measuring system according to Claim 1. characterized in that the calibrating device (A$_4$) for calibrating the amplitude ratio of the scanning signals (S$_1$. S$_3$ : S$_2$. S$_4$) of the scanning elements (P$_1$. P$_3$ : P$_2$. P$_4$) in the bridge circuit is provided with two calibrating elements (K$_2$'. K$_4$') the phase relationship of the modulated calibrating signals (G$_2$'. G$_4$') of which corresponds to the scanning signals (S$_2$. S$_4$).

5. Measuring system according to Claim 1. characterized in that the scanning elements (P) and the calibrating elements (K) consist of light-sensitive elements.

6. Measuring system according to Claim 5. characterized in that the scanning elements (P) and the calibrating elements (K) are illuminated by the same light source (4).

7. Measuring system according to Claim 1. characterized in that the calibrating elements (K) consist of magnetic. inductive or capacitive elements.

8. Measuring system according to Claim 1. characterized in that the bridge circuits of the calibrating device (A) are provided in each case with at least one fixed resistor (R. R$_-$) and an adjustable resistor (R$_D$).

## Revendications

1. Système électrique de mesure numérique de longueurs ou d'angles constitué par un dispositif (3) pour le balayage d'une échelle (1). par un dispositif d'interprétation (W) pour interpréter le signal (S) délivré par au moins un élément (P) du dispositif de balayage (3). l'élément (P) au moins étant raccordé au dispositif d'interprétation (W). et par un dispositif d'ajustement (A) comprenant au moins un élément d'ajustement (K) ainsi qu'un élément de réglage (R$_D$) pour l'ajustement au moins d'un paramètre erroné des signaux de balayage (S). caractérisé par le fait que le dispositif d'ajustement (A) se compose d'au moins un montage en pont qui comporte l'élément de réglage (R$_D$) et qui est alimenté par l'élément d'ajustement (K) au moins et dont une diagonale est raccordée au dispositif d'interprétation (W) parallèlement à au moins un élément (P) du dispositif de balayage (3).

2. Système de mesure selon la revendication 1. caractérisé par le fait que le dispositif (A$_1$ : A$_2$) pour l'ajustement de la symétrie des signaux (S$_1$. S$_3$ : S$_2$. S$_4$) des éléments de balayage (P$_1$. P$_3$ : P$_2$. P$_4$) comporte dans le montage en pont au moins un élément d'ajustement (K$_5$. K$_5$' : K$_6$. K$_6$') qui délivre un signal d'ajustement constant (G$_5$. G$_5$' : G$_6$. G$_6$').

3. Système de mesure selon la revendication 1. caractérisé par le fait que le dispositif (A$_3$) pour l'ajustement de l'angle de phase entre les signaux (S$_1$. S$_3$ : S$_2$. S$_4$) des éléments de balayage (P$_1$. P$_3$ : P$_2$. P$_4$) comporte dans le montage en pont deux éléments d'ajustement (K$_2$. K$_4$) dont les signaux d'ajustement modulés (G$_2$. G$_4$) sont déphasés de 90° par rapport aux signaux de balayage (S$_1$. S$_3$).

4. Système de mesure selon la revendication 1. caractérisé par le fait que le dispositif (A$_4$) pour l'ajustement du rapport d'amplitudes des signaux (S$_1$. S$_3$ : S$_2$. S$_4$) des éléments de balayage (P$_1$. P$_3$ : P$_2$. P$_4$) comporte dans le montage en pont deux éléments d'ajustement (K$_2$'. K$_4$') dont les signaux d'ajustement modulés (G$_2$'. G$_4$') coïncident dans la position de phases avec les signaux de balayage (S$_2$. S$_4$).

5. Système de mesure selon la revendication 1. caractérisé par le fait que les éléments de balayage (P) et les éléments d'ajustement (K) sont constitués par des cellules photoélectriques.

6. Système de mesure selon la revendication 5. caractérisé par le fait que les éléments de balayage (P) et les éléments d'ajustement (K) sont éclairés par la même source lumineuse (4).

7. Système de mesure selon la revendication 1.

caractérisé par le fait que les éléments d'ajustement (K) sont constitués par des éléments magnétiques. inductifs ou capacitifs.

8. Système de mesure selon la revendication 1.

caractérisé par le fait que les montages en pont des dispositifs d'ajustement (A) comportent respectivement au moins une résistance fixe (R. $R_L$) et une résistance réglable ($R_p$).

FIG.1

FIG. 2

FIG.3a

$R_P$
$K_5$
$R_L$
$R$
$R$
$A_1$

FIG.3c

$R_L$
$A_1'$
$R_P$
$R$
$K_5$
$K_5'$

FIG.3b

$R_P$
$K_6$
$R_L$
$R$
$R$
$A_2$

FIG.3d

$R_L$
$A_2'$
$R_P$
$R$
$K_6$
$K_6'$

FIG.4a

FIG.4b

FIG.5a

FIG.5b